(19) Europäisches Patentamt / European Patent Office / Office européen des brevets

(11) **EP 4 238 241 B1**

(12) **FASCICULE DE BREVET EUROPEEN**

(45) Date de publication et mention
de la délivrance du brevet:
**29.04.2026 Bulletin 2026/18**

(21) Numéro de dépôt: **21815563.8**

(22) Date de dépôt: **29.10.2021**

(51) Classification Internationale des Brevets (IPC):
**H04B 10/11** *(2013.01)* **G02B 19/00** *(2006.01)*

(52) Classification Coopérative des Brevets (CPC):
**H04B 10/11; G02B 19/0028**

(86) Numéro de dépôt international:
**PCT/FR2021/051908**

(87) Numéro de publication internationale:
**WO 2022/090673 (05.05.2022 Gazette 2022/18)**

(54) **DISPOSITIF OPTIQUE D'ORIENTATION DANS L'ESPACE D'UN DIAGRAMME D'ÉMISSION ET/ OU D'UN DIAGRAMME DE RÉCEPTION D'ONDES LUMINEUSES À LARGE BANDE SPECTRALE**

OPTISCHE VORRICHTUNG ZUR RÄUMLICHEN AUSRICHTUNG EINES STRAHLUNGSMUSTERS ZUR ÜBERTRAGUNG UND/ODER EINES STRAHLUNGSMUSTERS ZUM EMPFANG VON LICHTWELLEN MIT BREITEM SPEKTRALBAND

OPTICAL DEVICE FOR ORIENTING IN SPACE A RADIATION PATTERN FOR TRANSMISSION AND/OR A RADIATION PATTERN FOR RECEPTION OF LIGHT WAVES OF WIDE SPECTRAL BAND

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.10.2020 FR 2011150**

(43) Date de publication de la demande:
**06.09.2023 Bulletin 2023/36**

(73) Titulaire: **Oledcomm**
**78140 Velizy Villacoublay (FR)**

(72) Inventeurs:
• **VALENCIA ESTRADA, Juan Camilo**
**78140 Vélizy-Villacoublay (FR)**
• **ESPINOZA GARCIA, Adrian Alejandro**
**78370 Plaisir (FR)**

(74) Mandataire: **Bonnet, Michel**
**Cabinet Bonnet**
**93, rue Réaumur**
**75002 Paris (FR)**

(56) Documents cités:
**WO-A1-2019/238543 WO-A2-01/69300**
**US-A1- 2008 092 879**

• **VALENCIA-ESTRADA JUAN CAMILO ET AL: "Free-form Compound Concentrators for Optical Wireless Communications", 2019 GLOBAL LIFI CONGRESS (GLC), IEEE, 12 June 2019 (2019-06-12), pages 1 - 6, XP033629672, DOI: 10.1109/GLC.2019.8864132**

**Description**

La présente invention concerne les réseaux optiques non filaires, et plus précisément les dispositifs optiques qui équipent certains équipements de communication de tels réseaux.

L'invention s'applique plus particulièrement aux dispositifs optiques chargés d'orienter dans l'espace un diagramme d'émission et/ou un diagramme de réception d'ondes lumineuses pour un équipement de communication optique sans fil (ou OWC (« Optical Wireless Communication »)) d'un réseau optique non filaire, éventuellement de type LiFi (« Light Fidelity »). Mais l'invention concerne d'autres types de communication sans fil que le LiFi, comme par exemple les communications avec des rayonnements en térahertz (THz), micro-ondes ou radio.

On notera que l'équipement de communication optique sans fil peut, par exemple, être un répéteur de signaux optiques, c'est-à-dire un équipement de communication comportant un récepteur recevant des ondes lumineuses (ou signaux optiques) provenant d'un premier noeud d'un réseau optique non filaire, et un transmetteur transmettant ces ondes lumineuses (ou signaux optiques) reçu(e)s à au moins un second noeud séparé du premier nœud par un obstacle empêchant le passage d'ondes lumineuses. Un tel répéteur de signaux optiques peut être unidirectionnel ou bidirectionnel.

Il existe plusieurs types de dispositifs optiques capables d'orienter dans l'espace un diagramme d'émission et/ou un diagramme de réception d'ondes lumineuses (ou « beam steering »).

Ainsi, certains dispositifs optiques comprennent des galvanomètres associés à des servomécanismes, ce qui nécessite une alimentation haute puissance et donc empêche une utilisation dans un équipement de communication optique sans fil OWC à faible coût et à faible consommation d'énergie.

D'autres dispositifs optiques comprennent des microsystèmes électromécaniques (ou MEMS (« MicroElectroMechanical Systems »)) et déflecteurs. Ces MEMS permettent de faire varier dans l'espace le diagramme d'émission par orientation contrôlée de microlentilles ou micro-miroirs ou par déformations locales d'un miroir au moyen de micro-actionneurs. Cette solution nécessite aussi une alimentation haute puissance, s'avère onéreuse, peu pérenne (typiquement de l'ordre de deux ans), et n'offre qu'une plage directionnelle relativement limitée.

Encore d'autres dispositifs optiques comprennent des éléments holographiques ou diffractifs. Ils s'avèrent simples et peu consommateurs d'énergie électrique, mais sont onéreux et inadaptés à une large bande spectrale.

Encore d'autres dispositifs optiques comprennent une lentille comportant au moins une surface optique dont la forme particulière permet d'orienter dans l'espace un diagramme d'émission et/ou un diagramme de réception d'ondes lumineuses. C'est notamment le cas du dispositif optique décrit dans le document brevet US-B2 7,113,352 et dans lequel la lentille est monolithique et comprend au moins une surface optique dite réglée et à génératrices rectilignes (ou droites). Le terme « monolithique » signifie composé d'une seule pièce, et une surface optique est dite « réglée » si elle a été générée par la translation et/ou la rotation d'une génératrice. Par exemple, si la surface optique est générée par un segment rectiligne, et que la position initiale de tous les points de la génératrice ne coïncide qu'avec la position finale, une surface optique réglée annulaire est générée et celle-ci est totalement lisse en ses points intérieurs. Un exemple bien connu d'une telle surface optique est la bande de Möbius. Ce type de dispositif optique est certes peu onéreux à fabriquer et peu consommateur d'énergie électrique, mais il est difficilement utilisable pour une large bande spectrale. D'autres exemples de surface optique sont divulgués dans les documents de brevets WO2019/238543, WO01/69300, ainsi que dans la publication scientifique « Free-form Compound Concentrators for Optical Wireless Communications ».

Il peut ainsi être souhaité de prévoir un dispositif optique qui permette de s'affranchir d'au moins une partie des problèmes et contraintes précités.

A cet effet, il est notamment proposé un dispositif optique, d'une part, destiné à faire partie d'un équipement de communication d'un réseau de communication optique sans fil, et, d'autre part, comprenant un élément optique monolithique et comportant au moins une surface optique réglée propre à orienter dans l'espace un diagramme d'émission et/ou un diagramme de réception d'ondes lumineuses.

Ce dispositif optique se caractérise par le fait que la génératrice courbe de la surface optique réglée de son élément optique présente une orientation variant de façon harmonique non nulle en fonction de sa position en translation et/ou en rotation dans ladite au moins une surface optique réglée. On entend ici par « fonction harmonique » une fonction présentant une variation cyclique, sans restriction sur le nombre de cycles ou le nombre de périodes.

Ainsi, on dispose d'un dispositif optique peu onéreux à fabriquer, peu consommateur d'énergie électrique, et pouvant être utilisé pour une large bande spectrale et offrir une plage directionnelle relativement importante.

Le dispositif optique selon l'invention peut comporter d'autres caractéristiques qui peuvent être prises séparément ou en combinaison, et notamment :

- sa (chaque) surface optique réglée de l'élément optique peut avoir une orientation variant continument, infiniment différentiable et exprimable en série de Taylor ;
- en présence de la précédente option, le plan contenant la génératrice courbe peut être méridional. Dans ce cas, la génératrice peut être représentée par un vecteur de position représenté en coordonnées cartésiennes à l'aide de paramètres de coordonnées polaires par $p_1 = [\pm R(\alpha)\cos(\alpha+\beta), R(\alpha)\sin(\alpha+\beta)]$, où $\alpha$ est un angle d'élévation, $R(\alpha)$ est la norme d'un rayon vectoriel et $\beta$ est un angle d'inclinaison variant de façon harmonique en fonction de la position angulaire ;

- en présence de la précédente sous-option, la norme $R(\alpha)$ du rayon vectoriel peut varier de façon harmonique en fonction de la position angulaire ;
- la surface optique réglée de l'élément optique peut être une face interne assurant une réflexion totale interne. Dans ce cas, l'élément optique peut avoir un indice de réfraction qui varie de façon harmonique en fonction de la position angulaire ;
- la (chaque) surface optique réglée de l'élément optique peut être ouverte ou fermée.

L'invention propose également un équipement de communication destiné à faire partie d'un réseau optique non filaire et comprenant au moins un premier récepteur propre à recevoir des ondes lumineuses provenant d'un premier équipement du réseau optique non filaire, et/ou au moins un premier transmetteur propre à transmettre des ondes lumineuses au premier équipement ou à un second équipement du réseau optique non filaire.

Cet équipement de communication se caractérise par le fait qu'il comprend au moins un premier dispositif optique du type de celui présenté ci-avant, placé en amont de l'éventuel premier récepteur et/ou en aval de l'éventuel premier transmetteur.

L'équipement de communication selon l'invention peut comporter d'autres caractéristiques qui peuvent être prises séparément ou en combinaison, et notamment :

- dans un premier mode de réalisation dit « synchrone » cet équipement de communication peut comprendre le premier récepteur et le premier transmetteur, avec un premier dispositif optique placé en amont du premier récepteur et en aval du premier transmetteur afin d'orienter dans l'espace un diagramme de réception d'ondes lumineuses et un diagramme de transmission d'ondes lumineuses ;

- dans ce premier mode de réalisation, le premier transmetteur peut être propre à transmettre au premier équipement d'autres ondes lumineuses provenant du second équipement. Dans ce cas, il peut aussi comprendre un second transmetteur couplé au premier récepteur et propre à transmettre au second équipement les ondes lumineuses issues du premier récepteur, un second récepteur propre à recevoir les autres ondes lumineuses provenant du second équipement et couplé au premier transmetteur, et un second dispositif optique placé en amont du second récepteur et en aval du second transmetteur afin d'orienter dans l'espace un diagramme de réception des autres ondes lumineuses et un diagramme de transmission des ondes lumineuses ;

- dans un second mode de réalisation dit « asynchrone » cet équipement de communication peut comprendre le premier récepteur et le premier transmetteur, avec le premier dispositif optique placé en amont du premier récepteur afin d'orienter dans l'espace un diagramme de réception des ondes lumineuses. Dans ce cas, il peut comprendre un second dispositif optique placé en aval du premier transmetteur afin d'orienter dans l'espace un diagramme de transmission des ondes lumineuses ;

- dans ce second mode de réalisation, le premier transmetteur est propre à transmettre au premier équipement d'autres ondes lumineuses provenant du second équipement. Dans ce cas, il peut aussi comprendre un second transmetteur couplé au premier récepteur et propre à transmettre au second équipement les ondes lumineuses issues du premier récepteur, un second récepteur propre à recevoir les autres ondes lumineuses provenant du second équipement et couplé au premier transmetteur, un troisième dispositif optique placé en amont du second récepteur afin d'orienter dans l'espace un diagramme de réception des autres ondes lumineuses, et un quatrième dispositif optique placé en aval du second transmetteur afin d'orienter dans l'espace un diagramme de transmission des ondes lumineuses ;

- par exemple, il peut constituer un répéteur de signaux optiques et/ou un multiplexeur de signaux optiques et/ou un expanseur de signaux optiques et/ou un combineur de signaux optiques.

L'invention sera mieux comprise à l'aide de la description qui va suivre, donnée uniquement à titre d'exemple et faite en se référant aux dessins annexés dans lesquels :

[Fig.1] la figure 1 illustre schématiquement et fonctionnellement un premier exemple de réalisation d'un répéteur de signaux optiques comprenant deux dispositifs optiques selon l'invention et faisant partie d'un réseau optique non filaire,

[Fig.2] la figure 2 illustre schématiquement et fonctionnellement un second exemple de réalisation d'un répéteur de signaux optiques comprenant quatre dispositifs optiques selon l'invention et faisant partie d'un réseau optique non filaire,

[Fig.3] la figure 3 illustre schématiquement au sein d'un diagramme spatial, un premier exemple de surface optique réglée annulaire ayant une première variation harmonique de la pente de sa génératrice,

[Fig.4] la figure 4 illustre schématiquement au sein d'un diagramme spatial, un deuxième exemple de surface optique réglée annulaire ayant une deuxième variation harmonique de la pente de sa génératrice,

[Fig.5] la figure 5 illustre schématiquement au sein d'un diagramme spatial, un troisième exemple de surface optique réglée annulaire ayant une troisième variation harmonique de la pente de sa génératrice,

[Fig.6] la figure 6 illustre schématiquement au sein d'un diagramme spatial, un premier exemple de surface optique réglée non annulaire ayant une première variation harmonique de la pente de sa génératrice,

[Fig.7] la figure 7 illustre schématiquement au sein d'un diagramme spatial, un deuxième exemple de surface optique réglée non annulaire ayant une deuxième variation harmonique de la pente de sa génératrice,

[Fig.8] la figure 8 illustre schématiquement au sein d'un diagramme spatial, un quatrième exemple de surface optique réglée annulaire ayant une quatrième variation harmonique de la pente de sa génératrice parabolique,

[Fig.9] la figure 9 illustre schématiquement au sein d'un diagramme spatial, un troisième exemple de surface optique réglée non annulaire ayant une troisième variation harmonique de la pente de sa génératrice parabolique,

[Fig.10] la figure 10 illustre schématiquement au sein d'un diagramme spatial, un quatrième exemple de surface optique réglée non annulaire ayant une quatrième variation harmonique de la pente de sa génératrice parabolique,

[Fig.11] la figure 11 illustre schématiquement au sein d'un diagramme spatial, un cinquième exemple de surface optique intérieure annulaire réglée, générée par la rotation d'une barrière optique variable,

[Fig.12] la figure 12 illustre schématiquement au sein d'un diagramme spatial, un sixième exemple de surface optique extérieure annulaire réglée, générée par la rotation d'une barrière optique variable avec un changement de phase,

[Fig.13] la figure 13 illustre schématiquement au sein d'un diagramme spatial, un exemple d'élément optique 11 comportant les deux surfaces optiques réglées des figures 11 et 12, et

[Fig.14] la figure 14 illustre schématiquement un exemple d'élément optique définissant un miroir annulaire réglé à deux faces réfléchissantes, ayant comme génératrice un segment de ligne droite, et placé sur une carte à circuits imprimés sur laquelle sont installées une diode électroluminescente et une photodiode.

L'invention a notamment pour but de proposer un dispositif optique 1 destiné à faire partie d'un équipement de communication 2, lui-même destiné à faire partie d'un réseau optique non filaire 3.

Dans ce qui suit on considère que le réseau (optique non filaire) 3 est de type LiFi. Mais l'invention n'est pas limitée à ce type de réseau optique non filaire. Elle concerne en effet tout type de réseau optique non filaire au sein duquel les communications sont de type OWC (« Optical Wireless Communication » - communication optique sans fil).

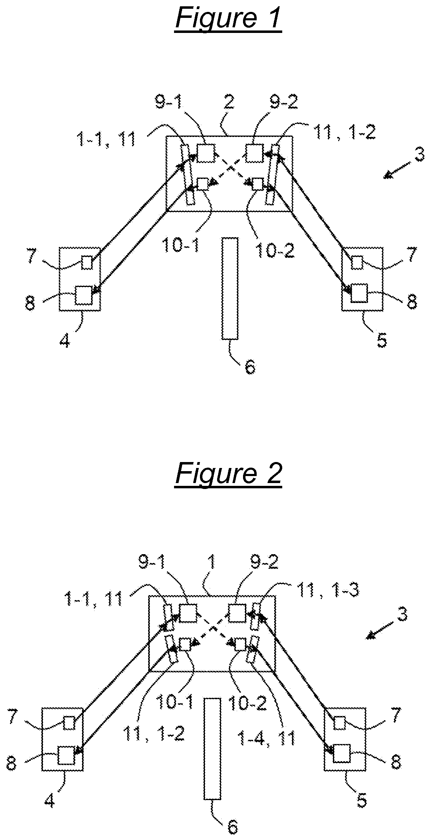

On a schématiquement et fonctionnellement représenté sur les figures 1 et 2 des parties d'exemples de réseau optique non filaire 3. Dans ces exemples, le réseau (optique non filaire) 3 comprend un équipement de communication 2 comportant des dispositifs optiques 1 selon l'invention, et deux autres équipements de communication 4 et 5 (ici dépourvus de dispositif optique 1, mais qui pourraient en comprendre au moins un). Par exemple, ces deux autres équipements de communication 4 et 5 constituent deux nœuds du réseau 3 qui doivent communiquer de façon bidirectionnelle au moyen d'ondes lumineuses comportant des signaux optiques, et qui sont séparés par un obstacle 6 empêchant la lumière (et donc les ondes lumineuses) de passer. Ces équipements de communication 4 et 5 peuvent, par exemple, être des points d'accès au réseau 3, des ordinateurs (fixes ou portables), des tablettes électroniques, des téléphones mobiles intelligents (ou « smartphones »), ou des consoles de jeux, équipé(e)s chacun(e) d'un équipement d'interface optique. Ce dernier comprend un module d'émission 7 chargé de transformer des signaux électriques porteurs d'informations (ou données) en signaux lumineux modulés en intensité pour transporter ces mêmes informations (ou données), et un module de réception 8 chargé de transformer des signaux lumineux, modulés en intensité (pour transporter des informations (ou données)), en signaux électriques porteurs de ces mêmes informations (ou données).

Dans les deux exemples illustrés l'équipement de communication 2 constitue un répéteur de signaux optiques bidirectionnel permettant de transmettre les premières ondes lumineuses issues du premier nœud (ou équipement de communication) 4 au second nœud (ou équipement de communication) 5, et réciproquement de transmettre les secondes ondes lumineuses issues du second nœud (ou équipement de communication) 5 au premier nœud (ou équipement de communication) 4. A cet effet, le premier nœud 4 comprend notamment un premier récepteur 9-1 propre à recevoir des premières ondes lumineuses provenant d'un premier équipement du réseau 3 (ici le premier nœud 4), un second récepteur 9-2 propre à recevoir des secondes ondes lumineuses provenant d'un second équipement du réseau 3 (ici le second nœud 5), un premier transmetteur 10-1 couplé au second récepteur 9-2 et propre à transmettre au premier équipement 4 du réseau 3 les secondes ondes lumineuses reçues par le second récepteur 9-2 et provenant du second équipement 5 du réseau 3, et un second transmetteur 10-1 couplé au premier récepteur 9-1 et propre à transmettre au second équipement 4 du réseau 3 les premières ondes lumineuses reçues par le premier récepteur 9-1 et provenant du premier équipement 4 du réseau 3.

Dans une variante de réalisation l'équipement de communication 2 pourrait constituer un répéteur de signaux optiques monodirectionnel. Dans ce cas, il comprend notamment un unique récepteur 9-1 propre à recevoir des ondes lumineuses provenant d'un équipement du réseau 3 (par exemple le premier nœud 4), et au moins un transmetteur 10-2 couplé au premier récepteur 9-1 et propre à transmettre à au moins un autre équipement du réseau 3 (par exemple le second nœud 5) les ondes lumineuses reçues par le récepteur 9-1.

Comme illustré non limitativement sur les figures 1 et 2, l'équipement de communication 2 comprend au moins un dispositif optique 1, selon l'invention.

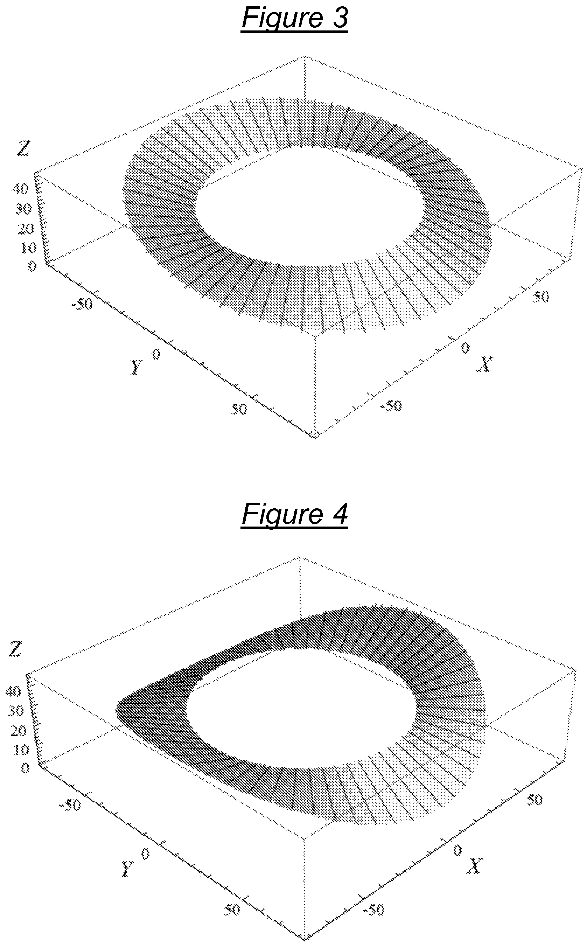

Ce dispositif optique 1 comprend un élément optique 11 monolithique et comportant au moins une surface optique réglée (voir figures 3 à 10) ayant une génératrice courbe choisie afin de présenter une orientation qui varie de façon harmonique en fonction de la position angulaire $\theta$, de manière à orienter dans l'espace un diagramme d'émission d'ondes lumineuses et/ou un diagramme de réception d'ondes lumineuses.

On dispose ainsi d'un dispositif optique 1 qui est notamment peu onéreux à fabriquer, peu consommateur d'énergie électrique, et qui peut être utilisé pour une large bande spectrale et offrir une plage directionnelle relativement importante.

On comprendra que selon les besoins, l'élément optique 11 peut orienter dans l'espace soit seulement un diagramme d'émission d'ondes lumineuses lorsqu'il n'agit que pour un transmetteur 10-j (ici j = 1 ou 2), et donc en aval de ce dernier (10-j), soit seulement un diagramme de réception d'ondes lumineuses lorsqu'il n'agit que pour un récepteur 9-k (ici k = 1 ou 2), et donc en amont de ce dernier (9-k), soit encore un diagramme d'émission d'ondes lumineuses et un diagramme de réception d'ondes lumineuses lorsqu'il agit à la fois pour un transmetteur 10-j et pour un récepteur 9-k.

Dans ce qui suit comme dans ce qui précède les notions « d'amont » et « d'aval » sont considérées par rapport au sens de propagation des ondes lumineuses. Par conséquent, un élément optique 11 est en amont d'un récepteur 9-k lorsqu'il agit sur des ondes lumineuses incidentes avant que ces dernières n'atteignent ce récepteur 9-k, et un élément optique 11 est en aval d'un transmetteur 10-j lorsqu'il agit sur des ondes lumineuses incidentes issues de ce transmetteur 10-j.

Il est rappelé que le terme « monolithique » signifie ici composé d'une seule pièce, et qu'une surface optique est dite « réglée » si elle a été générée par la translation et/ou la rotation d'une génératrice (ligne droite ou courbe dans un espace tridimensionnel).

Dans le premier exemple illustré non limitativement sur la figure 1, l'équipement de communication 2 comprend des premier 1-1 et second 1-2 dispositifs optiques. Le premier dispositif optique 1-1 est dit « synchrone » du fait qu'il est placé en amont du premier récepteur 9-1 et en aval du premier transmetteur 10-1 afin d'orienter dans l'espace simultanément un diagramme de réception d'ondes lumineuses et un diagramme de transmission d'ondes lumineuses pour les communications optiques sans fil bidirectionnelles avec le premier nœud 4. Le second dispositif optique 1-2 est aussi synchrone du fait qu'il est placé en amont du second récepteur 9-2 et en aval du second transmetteur 10-2 afin d'orienter dans l'espace un diagramme de réception d'ondes lumineuses et un diagramme de transmission d'ondes lumineuses pour les communications optiques sans fil bidirectionnelles avec le second nœud 5.

Dans le second exemple illustré non limitativement sur la figure 2, l'équipement de communication 2 comprend des premier 1-1, deuxième 1-2, troisième 1-3 et quatrième 1-4 dispositifs optiques. Le premier dispositif optique 1-1 est dit « asynchrone » du fait qu'il n'est placé qu'en amont du premier récepteur 9-1 afin d'orienter dans l'espace un diagramme de réception d'ondes lumineuses pour recevoir les communications optiques sans fil issues du premier nœud 4, et fonctionne indépendamment du deuxième dispositif optique 1-2. Le deuxième dispositif optique 1-2 est aussi asynchrone du fait qu'il n'est placé qu'en aval du premier transmetteur 10-1 afin d'orienter dans l'espace un diagramme de transmission d'ondes lumineuses pour transmettre les communications optiques sans fil vers le premier nœud 4. Le troisième dispositif optique 1-3 est aussi asynchrone du fait qu'il n'est placé qu'en amont du second récepteur 9-2 afin d'orienter dans l'espace un diagramme de réception d'ondes lumineuses pour recevoir les communications optiques sans fil issues du second nœud 5, et fonctionne indépendamment du quatrième dispositif optique 1-4. Le quatrième dispositif optique 1-4 est aussi asynchrone du fait qu'il n'est placé qu'en aval du second transmetteur 10-2 afin d'orienter dans l'espace un diagramme de transmission d'ondes lumineuses pour transmettre les communications optiques sans fil vers le second nœud 5.

On notera que dans les deux exemples illustrés non limitativement sur les figures 1 et 2, chaque dispositif optique 1-m (ici, m = 1 à 4) comprend un élément optique 11 constituant un système optique au travers duquel les ondes lumineuses incidentes passent (en transmission, réflexion, absorption et photoconversion) en ayant leurs trajectoires modifiées. Mais un élément optique 11 peut aussi constituer un prisme ou une lentille lorsqu'il assure une réfraction des ondes lumineuses incidentes, ou bien un miroir lorsqu'il assure une réflexion des ondes lumineuses incidentes, par exemple.

Dans un mode de réalisation, la (chaque) surface optique réglée de l'élément optique 11 peut avoir une orientation variant continument, infiniment différentiable et exprimable en série de Taylor. Ce type de surface optique ayant une pente qui varie « doucement » peut être représenté par la relation :

$$s = \left[ x, y, m(\theta)\left(\sqrt{x^2 + y^2} - r_0\right) + z_0 \right].$$

Par exemple, on peut avoir une variation harmonique de l'orientation (ou pente) de type $m(\theta) = m_0 \cos(k\theta)$, ce qui donne alors un élément optique 11 ayant une forme d'anneau réglé avec au moins une surface optique représentée par la relation :

$$s = \left[ x, y, (m_0 \cos(k\theta))\left(\sqrt{x^2 + y^2} - r_0\right) + z_0 \right],$$

où k est un facteur de forme et $m_0$ la pente initiale.

Cette dernière relation peut être exprimée en coordonnées cartésiennes en effectuant le changement de variable$\{\theta \to \arg(x + iy)\}$, où arg est la fonction argument et i est un nombre imaginaire pur.

Le facteur de forme permet de fermer l'anneau si et seulement si k est un entier non nul. Il détermine également le nombre de cycles dans l'anneau.

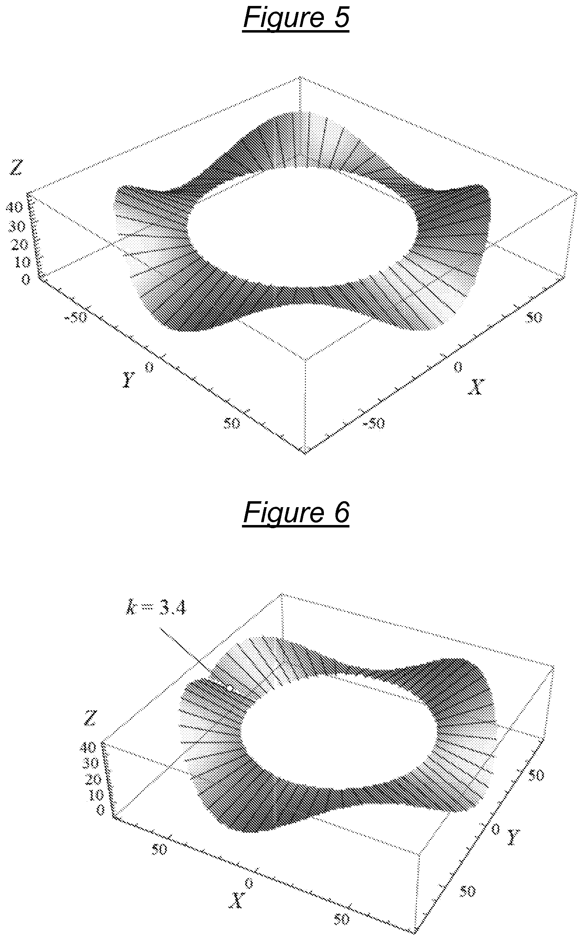

On a schématiquement illustré sur les diagrammes spatiaux des figures 3 à 5 respectivement des premier, deuxième et troisième exemples de surfaces optiques réglées annulaires ayant respectivement des première, deuxième et troisième variations harmoniques de la pente de leur génératrice. Le premier exemple de la figure 3 correspond au cas k=1. Le deuxième exemple de la figure 4 correspond au cas k=2. Le troisième exemple de la figure 5 correspond au cas k=4. Dans les trois surfaces optiques des figures 3 à 5, la pente a été établie avec m= -½ cos (k arg (x + iy)). On peut observer que l'entier k correspond au nombre de fois où les niveaux supérieur et inférieur sont répétés.

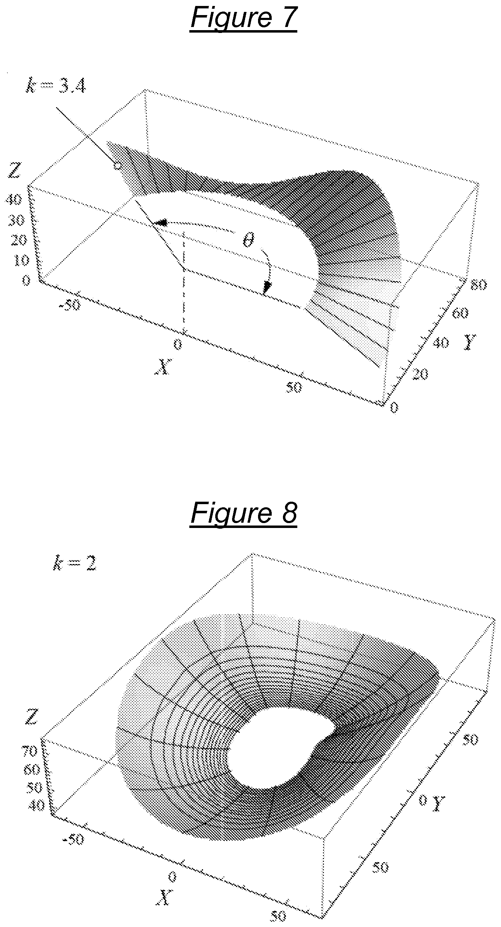

On notera que k peut aussi être un nombre réel non entier. Dans ce cas, la surface optique est réglée mais elle n'est pas annulaire puisqu'elle ne peut pas être fermée. k peut également être un nombre réel inférieur à un mais jamais égal à zéro. On a schématiquement illustré sur les diagrammes spatiaux des figures 6 et 7 respectivement des premier et deuxième exemples de surfaces optiques réglées non annulaires ayant respectivement des première et deuxième variations harmoniques de la pente de leur génératrice pour k=3,4 et une pente calculée avec m= -½ cos (k arg (x + iy)). Dans le premier exemple de la figure 6 la surface optique a été évaluée avec un angle polaire $\theta$ variant entre -$\pi$ et $\pi$, et l'on peut observer une discontinuité lorsque l'angle polaire est égal à 180°. Dans le deuxième exemple de la figure 7 la surface optique a été évaluée avec un angle polaire $\theta$ variant entre 0 radian et $4\pi/5$ radians.

On peut observer sur les figures 3 à 7 que tous les secteurs ou sections polaires d'une surface optique à pente à variation harmonique (qu'elle soit annulaire ou non) peuvent être utilisés pour concevoir des éléments optiques synchrones à condition que chaque secteur de surface optique contienne un ou plusieurs cycles complets. Lorsqu'une surface présente une variation harmonique dans sa forme, elle peut être représentée mathématiquement avec des fonctions trigonométriques.

On notera que l'on peut utiliser un plan méridional pour la génératrice. On entend ici par « plan méridional » un plan contenant l'axe d'un système optique (il est aussi connu sous le nom de plan tangentiel). Dans ce cas, la génératrice peut, par exemple, être représentée par un vecteur de position représenté en coordonnées cartésiennes à l'aide de paramètres de coordonnées polaires par $p_1 = [\pm R(\alpha)\cos(\alpha+\beta), R(\alpha)\sin(\alpha+\beta)]$, où $\alpha$ est un angle d'élévation, $R(\alpha)$ est la norme d'un rayon vectoriel et $\beta$ est un angle d'inclinaison variant de façon harmonique en fonction de la position angulaire.

En fait, pour parvenir à cette représentation utilisant les paramètres de coordonnées polaires, on part d'une fonction explicite $z_g = f(r)$ qui contient le segment de la génératrice et pouvant être représenté avec un vecteur de position sur un plan méridional par la relation $P_1 = [r, f(r)]$, où f(r) peut être une fonction continue ou par sections. Cette dernière relation peut alors être transformée en utilisant les paramètres de coordonnées polaires, ce qui donne la relation $P_1 = [R(\alpha) \cos\alpha, R(\alpha)\sin\alpha]$, où $\alpha$ est l'angle d'élévation et $R(\alpha)$ est la norme du rayon vectoriel ($\|P_1\| = \sqrt{r^2 + f(r)^2}$, si $f(R(\alpha)\cos\alpha) = R(\alpha)\sin\alpha$).

Maintenant, si l'on rend la génératrice symétrique et orientable (suivant un angle d'inclinaison β), le vecteur de position méridional $p_1$ peut se réécrire :

$$P_1 = [\pm R(\alpha)\cos(\alpha + \beta), R(\alpha)\sin(\alpha + \beta)],$$

et donc, on peut représenter la surface optique réglée par une révolution en coordonnées paramétriques tridimensionnelles avec la relation :

$$s = [\pm R(\alpha)\cos(\alpha + \beta)\cos\theta, \pm R(\alpha)\cos(\alpha + \beta)\sin\theta, R(\alpha)\sin(\alpha + \beta)],$$

où θ est l'angle de rotation.

Si l'on veut que la surface s, représentée par la dernière relation, soit annulaire avec une variation harmonique de l'angle d'inclinaison β, alors on peut réécrire cette dernière relation :

$$s = [\pm R(\alpha)\cos(\alpha + \beta(\theta))\cos\theta, \pm R(\alpha)\cos(\alpha + \beta(\theta))\sin\theta, R(\alpha)\sin(\alpha + \beta(\theta))],$$

avec les conditions :

$$\begin{cases} \beta(\theta) \neq \text{constante}, \\ \{x, y, z\} \, constant \, et \, \in s, \forall \, (\alpha, \theta) \end{cases}.$$

Si l'angle d'inclinaison β de la génératrice varie harmonieusement, β(θ) est une fonction harmonique. Par exemple, on peut choisir β(θ) = g(cos(kθ)), et dans ce cas, la surface optique générée est lisse, annulaire et fermée, si et seulement si k est un nombre entier autre que zéro.

On a schématiquement illustré sur le diagramme spatial de la figure 8 un quatrième exemple de surface optique réglée annulaire ayant une quatrième variation harmonique de la pente de sa génératrice (ici parabolique). Cet exemple correspond à une distance focale f = 50 mm, un angle d'élévation maximal α=π/10, un rayon interne $r_i$ de la surface optique annulaire égal à 100 mm, un angle d'inclinaison β = (π/180)*(40 + 10 cos(2θ)), et un rayon d'élévation donné par la relation :

$$R(\alpha) = sec\alpha\left(r_i - 2 * \sqrt{fsin\alpha(r_i cos\alpha + fsin\alpha)} + 2ftan\alpha\right).$$

On notera également que la norme R(α) du rayon vectoriel peut aussi, éventuellement, varier de façon harmonique en fonction de la position angulaire θ.

Dans ce cas la surface optique réglée peut être représentée par la relation :

$$s = [\pm R(\theta, \alpha)\cos(\alpha + \beta(\theta))\cos\theta, \pm R(\theta, \alpha)\cos(\alpha + \beta(\theta))\sin\theta, R(\theta, \alpha)\sin(\alpha + \beta(\theta))],$$

avec les mêmes conditions que précédemment :

$$\begin{cases} \beta(\theta) \neq \text{constante}, \\ \{x, y, z\} \, constant \, et \, \in s, \forall \, (\alpha, \theta) \end{cases}.$$

La surface optique réglée représentée par la dernière relation (avec les conditions précédentes) peut également être un secteur lisse et harmonieux qui contient au moins une période complète (ou un pavé complet).

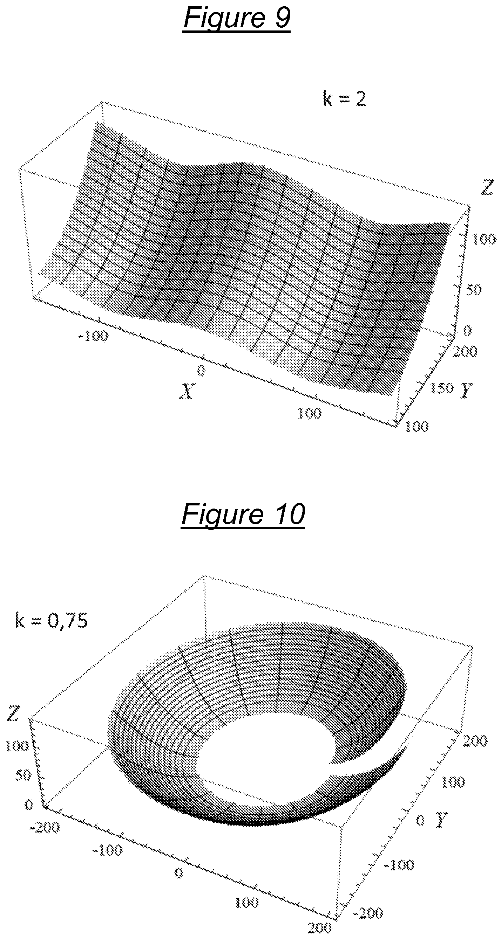

On a schématiquement illustré sur le diagramme spatial de la figure 9 un troisième exemple de surface optique réglée non annulaire ayant une troisième variation harmonique de la pente de sa génératrice (ici parabolique). Cet exemple correspond à une distance focale f = 50 mm, un angle d'élévation maximal α=π/10, un rayon interne $r_i$ de la surface optique annulaire linéaire ($r_i$ = [x,0,0]) et égal à 100 mm, un angle d'inclinaison β = (π/180)*(10 + 5 cos(x π/180)), et un rayon d'élévation donné par la relation :

$$R(\alpha) = sec\alpha\left(r_i + 2 * \sqrt{fsin\alpha(r_i cos\alpha + fsin\alpha)} + 2ftan\alpha\right).$$

On a schématiquement illustré sur le diagramme spatial de la figure 10 un quatrième exemple de surface optique réglée non annulaire ayant une quatrième variation harmonique de la pente de sa génératrice (ici parabolique), lui donnant une forme en spirale. Cet exemple correspond à une distance focale f = 50 mm, un angle d'élévation maximal $\alpha = \pi/10$, un rayon interne $r_i$ de la surface optique annulaire linéaire ($r_i = [x,0,0]$) et égal à 100 mm, un angle d'inclinaison $\beta = (\pi/180)(10 + 10\cos(0,75\theta))$, et un rayon d'élévation donné par la relation :

$$R(\alpha) = \sec\alpha\left(r_i + 2 * \sqrt{f\sin\alpha(r_i\cos\alpha + f\sin\alpha)} + 2f\tan\alpha\right).$$

On notera également que si le rayon interne $r_i$ de la surface optique (ou « rail de déplacement ») est linéaire, cette surface optique peut être représentée par la relation : $s = r_i + p_1(\|r_i\|, \alpha, \beta(\|r_i\|))$, où $r_i$ devient le vecteur de position de la génératrice $p_1$. La surface optique s est alors fonction de la distance de déplacement $\|r_i\|$, de l'angle d'élévation $\alpha$ et de l'angle d'inclinaison $\beta$. L'angle d'inclinaison $\beta$ est une fonction harmonique de la distance de déplacement, avec la condition $\beta(\|r_i\|) \neq$ constante. Cela permet l'inclusion de tout rail de déplacement linéaire courbe dans l'espace tridimensionnel où l'angle d'inclinaison $\beta$ est fonction de la longueur d'arc de la trajectoire paramétrique $r_i$. Par exemple, si la surface optique est représentée par la relation : $s = [x, \pm R(x, \alpha)\cos(\alpha + \beta(x)), \pm R(x, \alpha)\sin(\alpha + \beta(x))]$, et que l'on veut que la surface optique réglée soit harmonieuse, $\beta(x)$ doit être une fonction harmonique, comme par exemple $\beta(x) \neq \beta 0 + \Delta\beta\cos(kx)$. Dans cet exemple purement illustratif, on a $r_i = [x, 0, 0]$ et $p_1 = [0, \pm R(x, \alpha)\cos(\alpha + \beta(x)), \pm R(x, \alpha)\sin(\alpha + \beta(x))]$.

On notera également que la (qu'une) surface optique réglée de l'élément optique 11 peut être une face intérieure (ou interne) qui assure une réflexion totale interne (ou réfraction). Dans ce cas, l'élément optique 11 a un indice de réfraction $n(\theta)$ qui varie de façon harmonique en fonction de la position angulaire $\theta$. Une telle option est combinable avec l'une au moins des options précédentes.

En présence de la dernière option, on peut introduire pour la génératrice la notion de « barrière optique » $R_{local}$ qui assure une réflexion totale interne (ou TIR). Par exemple, cette dernière ($R_{local}$) peut être représentée par la relation :

$$R_{local} = e^{\frac{\bar{\omega}}{\sqrt{n(\theta)^2 - 1}}} r_0,$$

dans laquelle $\bar{\omega}$ est l'élévation locale (fonction de l'angle d'élévation $\alpha$ par rapport à l'origine globale des coordonnées), et l'indice de réfraction $n(\theta)$ a une variation harmonique avec la condition supplémentaire $n(\theta) \neq constant$ pour créer une surface optique assurant une réflexion totale interne.

La barrière optique peut être représentée de façon paramétrique sur un plan méridional avec un vecteur de position $p_{local}$ pouvant être représenté par la relation :

$$p_{local} = \left[\pm e^{\frac{\bar{\omega}}{\sqrt{n(\theta)^2 - 1}}} r_0 \cos\bar{\omega}, e^{\frac{\bar{\omega}}{\sqrt{n(\theta)^2 - 1}}} r_0 \sin\bar{\omega}\right].$$

Cette barrière optique peut être située sur un côté d'une surface optique (par exemple le côté droit (avec le signe +) ou le côté gauche (avec le signe -) par rapport à l'origine locale des coordonnées).

Si l'inclinaison de la génératrice est locale (c'est-à-dire par rapport à l'origine des coordonnées locales), la relation précédente devient :

$$p_{local} = \left[\pm e^{\frac{\bar{\omega}}{\sqrt{n(\theta)^2 - 1}}} r_0 \cos(\bar{\omega} + \beta(\theta)), e^{\frac{\bar{\omega}}{\sqrt{n(\theta)^2 - 1}}} r_0 \sin(\bar{\omega} + \beta(\theta))\right],$$

avec un angle d'inclinaison $\beta$ pouvant être constant ou variable.

Afin que la surface optique réglée soit harmonieuse avec un angle d'inclinaison $\beta$ variable, $\beta$ doit être une fonction de la position angulaire $\theta$ dans le plan x - y (ou XY). Le point le plus proche de la génératrice (quand $\bar{\omega} = 0$) est alors toujours à une distance $r_0$, quel que soit l'angle d'inclinaison $\beta$ qu'elle peut avoir.

Pour créer une surface optique en forme d'anneau en utilisant la dernière relation, il faut calculer le rayon d'élévation global R et l'angle d'élévation global $\alpha$ correspondant. A cet effet, on peut représenter le vecteur de position $p_1$ par la relation suivante si l'on déplace l'origine des coordonnées locales vers les coordonnées absolues $\{r_i, z_i\}$ :

$$p_1 = r_i + p_{local} = [r_i, z_i] + \left[\pm e^{\frac{\overline{\omega}}{\sqrt{n(\theta)^2-1}}} r_0 \cos(\overline{\omega} + \beta(\theta)), e^{\frac{\overline{\omega}}{\sqrt{n(\theta)^2-1}}} r_0 \sin(\overline{\omega} + \beta(\theta))\right]$$

$$= \left[\pm e^{\frac{\overline{\omega}}{\sqrt{n(\theta)^2-1}}} r_0 \cos(\overline{\omega} + \beta(\theta)) + r_i, e^{\frac{\overline{\omega}}{\sqrt{n(\theta)^2-1}}} r_0 \sin(\overline{\omega} + \beta(\theta)) + z_i\right]$$

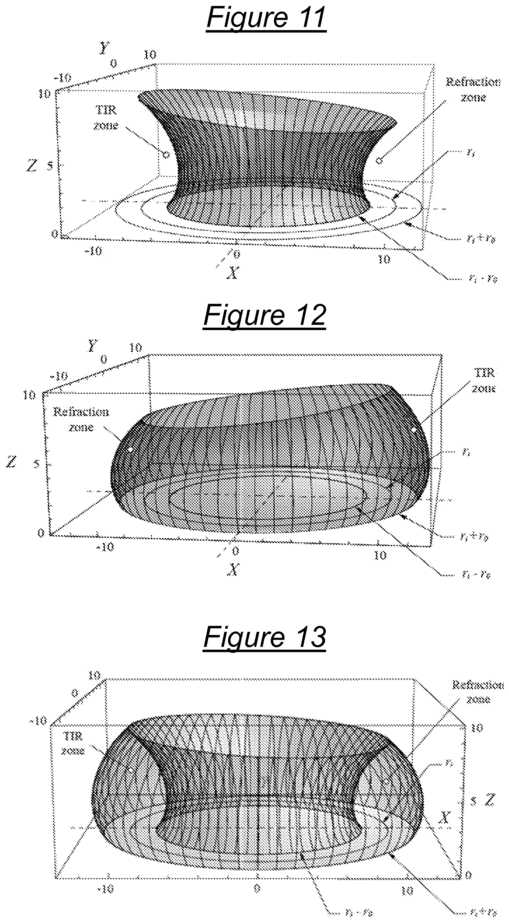

Comme on peut l'observer sur les diagrammes spatiaux des figures 11 et 12, des surfaces optiques annulaires définies par la relation précédente peuvent présenter des réfractions et des réflexions pour le secteur supplémentaire, avec une distribution de flux radiant qui varie en fonction de la position angulaire $\theta$.

On peut donc créer une surface optique catadioptrique annulaire pouvant être représentée de façon paramétrique par la relation:

$$s = \left[\pm p_{1,r} cos\theta, \pm p_{1,r} sin\theta, p_{1,z}\right],$$

où $p_{1,r}$ est la composante radiale de $p_1$, et $p_{1,z}$ est la composante dans la direction de l'axe z de $p_1$.

En développant la dernière relation, la surface optique s se réduit au vecteur colonne :

$$s = \begin{bmatrix} \pm \left(e^{\frac{\overline{\omega}}{\sqrt{n(\theta)^2-1}}} r_0 \cos(\overline{\omega} + \beta(\theta)) + r_i\right) cos\theta \\ \pm \left(e^{\frac{\overline{\omega}}{\sqrt{n(\theta)^2-1}}} r_0 \cos(\overline{\omega} + \beta(\theta)) + r_i\right) sin\theta \\ e^{\frac{\overline{\omega}}{\sqrt{n(\theta)^2-1}}} r_0 \sin(\overline{\omega} + \beta(\theta)) + z_i \end{bmatrix} \cdot$$

Une telle surface catadioptrique annulaire peut être représentée de façon paramétrique par l'angle d'élévation local $\varpi$, l'angle de rotation $\theta$, et le signe s=+/-1, avec les conditions fondamentales qui garantissent que la pièce de surface (fonction définie par morceaux) ne contient aucun point invariant :

$$\left\{\{x, y, z\}\ constant\ \in s,\ \forall\ (\overline{\omega}, \theta)\right\}.$$

L'angle d'élévation local $\varpi$ est délimité par $0 < \varpi_{min} \leq \varpi \leq \varpi_{max}$. Les valeurs extrêmes $\varpi_{min}$ et $\varpi_{max}$ doivent être préréglées ou calculées en fonction de l'angle d'émission total et de la variation de l'orientation dans l'espace de $\varpi$.

Une surface optique intérieure annulaire réglée, générée par la rotation d'une barrière optique variable, est représentée sur la figure 11, en prenant s = 1, $r_0$ = 2, $r_i$ = 10, $r_o$ = 12, $z_i$ = 0, $\beta$ = 0°, $\varpi_{min}$ = 0, $\varpi_{max}$ = $\pi/2$, et n($\theta$) = 1,5556 + 0,1cos $\theta$. Toutes les variables dimensionnelles sont ici en millimètres, et toutes les variables angulaires sont ici en radians.

Comme $\varpi_{max}$ = $\pi/2$, la projection du contour supérieur sur le plan x - y (ou XY) correspond au cercle de rayon $r_i$. Si un émetteur est placé en un point quelconque du cercle de rayon $r_i$, une partie de la lumière incidente atteint la surface optique réglée et peut être réfléchie avec la portion assurant une réflexion totale interne (ou TIR) ou bien réfractée. En fonction de la position angulaire de l'anneau par rapport à l'émetteur, la distribution de la lumière incidente peut varier harmonieusement.

Une autre surface optique annulaire extérieure réglée, générée par la rotation d'une barrière optique variable avec un changement de phase, est représentée sur la figure 12, en prenant s = -1, $r_0$ = 2, $r_i$ = 10, $r_o$ = 12, $z_i$ = 0, $\beta$ = 0°, $\varpi_{min}$ = 0, $\varpi_{max}$ = $\pi/2$, et n($\theta$) = 1,5556 + 0,1cos$\theta$. Toutes les variables dimensionnelles sont ici en millimètres, et toutes les variables angulaires sont ici en radians. Comme $\varpi_{max}$ = $\pi/2$, la projection du contour supérieur sur le plan x - y (ou XY) correspond au cercle de rayon $r_i$.

Si un émetteur est placé quelque part dans le cercle de rayon $r_i$, une partie de la lumière incidente atteint la surface optique réglée et peut être réfléchie, réfractée ou réfléchie totalement par réflexion totale interne (ou TIR). En fonction de la position angulaire de l'anneau par rapport à l'émetteur, la distribution de la lumière incidente peut varier harmonieusement de façon opposée au cas de la figure 11.

Si l'on compare le dernier vecteur colonne à la relation donnée plus haut (lorsque la norme R($\alpha$) du rayon

vectoriel varie de façon harmonieuse en fonction de la position angulaire θ), à savoir :

$$s = [\pm R(\theta, \alpha) \cos(\alpha + \beta(\theta)) \cos\theta, \pm R(\theta, \alpha) \cos(\alpha + \beta(\theta)) \sin\theta, R(\theta, \alpha)\sin(\alpha + \beta(\theta))],$$

on observe que les fonctions d'inclinaison de cette dernière relation ont été supprimées, puisque dans ce cas l'angle d'inclinaison β de la génératrice a été défini par rapport à une origine de coordonnées locales. Mais une inclinaison globale $\alpha_{(\varpi)}$ de la génératrice $R(\theta, \alpha_{(\varpi)})$ peut être incluse avec un nouvel angle d'inclinaison $\hat{\beta}(\theta)$.

On notera que l'on peut, par exemple, utiliser un indice de réfraction n(θ, $\overline{\varpi}$) à variation harmonique et représenté par la relation : $n(\theta, \overline{\omega}) = n_0(\overline{\omega}) + \Delta n(\overline{\omega})\sin(k\theta)$.

On notera également qu'un élément optique 11 peut comporter au moins deux surfaces optiques réglées. Par exemple, on peut combiner dans un même élément optique 11 la surface optique réglée intérieure de la figure 11 avec la surface optique réglée extérieure de la figure 12. On obtient alors un élément optique 11 du type de celui illustré sur la figure 13 (lentille annulaire avec deux interfaces à réflexion totale interne (ou TIR)). Il est important de noter que le générateur peut également être une fonction par morceaux totalement fermée. Si un émetteur est placé en un point quelconque du cercle de rayon $r_i$, une partie de la lumière incidente atteint la surface optique réglée intérieure et une autre partie de la lumière incidente atteint la surface optique réglée extérieure. En fonction de la position angulaire de l'anneau par rapport à l'émetteur, la lumière incidente sur les surfaces avec TIR peut être soit réfractée, soit réfléchie avec TIR. La lumière réfléchie avec TIR sur la surface intérieure est réfractée par la surface extérieure. La lumière réfléchie avec TIR sur la surface extérieure est réfractée par la surface intérieure.

Lors de la création d'un élément optique 11 pour l'émission, avec deux surfaces optiques réglées, on peut utiliser plusieurs stratégies différentes.

Ainsi, on peut créer un élément optique 11 en anneau avec une surface intérieure TIR, et une surface extérieure réglée définie avec :

- une génératrice d'arc circulaire avec un centre au point d'émission, afin de ne pas dévier le diagramme de radiation pour qu'il n'atteigne pas la surface intérieure, ou de ne pas dévier le diagramme de radiation réfléchi par la surface intérieure avec TIR, ou

- une génératrice d'arc à géométrie de forme libre, afin de réfracter ou réfléchir le diagramme de radiation pour qu'il n'atteigne pas la surface intérieure, ou de réfracter ou réfléchir le diagramme de radiation réfléchi par la surface intérieure avec TIR, ou

- une génératrice d'arc à géométrie de « barrière optique » avec TIR, afin de réfracter ou réfléchir avec TIR le diagramme de radiation pour qu'il n'atteigne pas la surface intérieure, ou de re-réfléchir avec TIR le diagramme de radiation réfléchi par la surface intérieure avec TIR. Si la fonction optique réfraction/TIR de la surface extérieure est déphasée de 180° par rapport à la fonction optique TIR/réfraction de la surface intérieure, on crée un autre sous-élément optique avec la fonction TIR/TIR/réfraction.

On peut aussi créer un élément optique 11 en anneau avec une surface extérieure TIR, et une surface intérieure réglée définie avec :

- une génératrice d'arc circulaire avec un centre au point d'émission, afin de ne pas dévier le diagramme de radiation pour qu'il n'atteigne pas la surface extérieure, ou de réfracter le diagramme de radiation réfléchi par la surface extérieure avec TIR, ou
- une génératrice d'arc à géométrie de forme libre, afin de réfracter ou réfléchir le diagramme de radiation pour qu'il n'atteigne pas la surface extérieure, ou de réfracter ou réfléchir le diagramme de radiation réfléchi par la surface extérieure avec TIR, ou

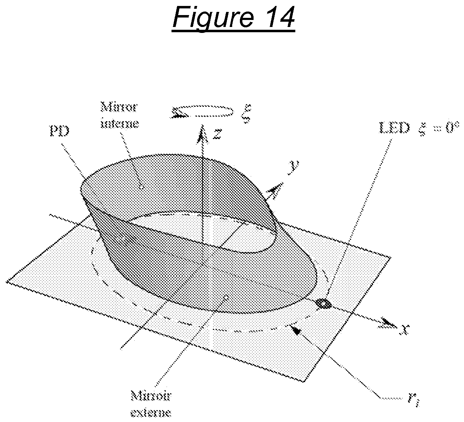

[0072]　- une génératrice d'arc à géométrie de « barrière optique » avec TIR, afin de réfracter ou réfléchir avec TIR le diagramme de radiation pour qu'il ne touche pas la surface extérieure, ou de re-réfléchir avec TIR le diagramme de radiation réfléchi par la surface extérieure avec TIR. Si la fonction optique réfraction/TIR de la surface intérieure est déphasée de 180° par rapport à la fonction optique TIR/réfraction de la surface extérieure, on crée un autre sous-élément optique avec la fonction TIR/TIR/réfraction. Ainsi, et comme illustré non limitativement sur la figure 14, on peut créer un miroir annulaire réglé avec un segment de ligne droite comme génératrice. Ce miroir illustré a deux faces réfléchissantes : une extérieure et une intérieure. Par ailleurs, ce miroir est ici placé sur une carte à circuits imprimés sur laquelle sont installées une diode électroluminescente (ou LED) et une photodiode (ou PD). La partie extérieure du miroir est conçue pour changer la direction du flux rayonnant émis par la LED, en fonction de l'angle ξ de positionnement du miroir, et dans le même temps, de façon synchrone, la partie intérieure du miroir est conçue pour augmenter le flux rayonnant reçu par la photodiode PD, selon le même angle $\xi$ de positionnement du miroir. Si l'on place un émetteur en un point quelconque du cercle de rayon $r_i$, une partie de la lumière incidente est réfléchie par le miroir.

En position initiale, lorsque l'angle $\xi$ de positionnement polaire est égal à zéro, la totalité du diagramme d'émission doit être émise sans incidence sur la partie extérieure (ou externe) du miroir. A cet effet, on peut placer un segment de ligne comme génératrice dans le deuxième quadrant représentant le miroir, avec une pente m = $\tan(\pi/2 + \Theta_{0.9w}/2) = \tan(145°)$. Mais lorsque l'on tourne le miroir d'un quart de tour, et qu'il est positionné avec un angle de positionnement polaire $\xi$ égal à 180° = $\pi$ radians, le miroir pivote autour d'un point de coordonnées $(r_0, z_0)$ afin que toutes les radiations arrivent sur le miroir pour être réfléchies avec une puissance de pointe à l'horizon. Cela est possible lorsque la pente du miroir est m = $\tan(\Theta_{0.09w}/2) = \tan(55°)$. Cette fonctionnalité est particulièrement utile pour établir une communication efficace entre des noeuds d'un réseau optique qui se trouvent sur un même plan (par exemple un toit).

On notera que l'on peut aussi calculer la longueur du segment de ligne droite afin de pouvoir contrôler comment la distribution de puissance varie lorsque le diagramme de rayonnement est divisé. Dans la position de base ($\xi = 0$) la longueur du segment n'influence pas la répartition de la puissance optique. Mais lorsque l'anneau est dans la position opposée ($\xi = 180°$), la longueur minimale du segment peut être calculée avec $l_{180°} = |r_0|$ CSC$(\Theta_{0.9w}/2)$*CSC$(\Theta_{0.9w})$, par exemple si $r_0 = -7$ mm, puis $z_0 = |r_0|$ ctg$(\Theta_{0.9w}/2) = 4,9$ mm et $l_{180°} = 25$ mm. De cette façon, le miroir annulaire réglé peut être conçu avec une génératrice droite de longueur constante l = 25 mm, ou avec une génératrice de longueur variable harmonique avec $l_{min} \leq l \leq l_{180°}$ (mm).

On notera également qu'un dispositif optique 1-n peut comporter une monture supportant son élément optique 11, ainsi qu'au moins un moteur électrique pour positionner dans l'espace son élément optique 11. Le contrôle de ce positionnement peut se faire manuellement ou de façon automatisée.

Il apparaît clairement qu'un dispositif optique 1 tel que celui décrit précédemment permet de concevoir des équipements de communication 2 (comme par exemple des répéteurs de signaux optiques, des multiplexeurs de signaux optiques, des expanseurs de signaux optiques ou des combineurs de signaux optiques, ou bien des combinaisons de répéteur(s) et/ou multiplexeur(s) et/ou expanseur(s) et/ou combineur(s)) à orientations multiples, par exemple pour des utilisations en espaces à obstacles multiples. De tels équipements de communication 2 peuvent, notamment et non limitativement, être utilisés dans un satellite de communication.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué. Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en œuvre de l'enseignement qui vient de lui être divulgué, l'invention étant définie par les revendications jointes.

## Revendications

1. Dispositif optique (1) pour un équipement de communication (2) d'un réseau de communication optique sans fil (3), ledit dispositif (1) comprenant un élément optique (11) monolithique et comportant au moins une surface optique réglée propre à orienter dans l'espace un diagramme d'émission et/ou un diagramme de réception d'ondes lumineuses, cette surface optique réglée étant générée par translation et/ou rotation d'une génératrice courbe, **caractérisé en ce que** la génératrice courbe de ladite au moins une surface optique réglée dudit élément optique (11) présente une orientation variant de façon harmonique non nulle en fonction de sa position en translation et/ou en rotation dans ladite au moins une surface optique réglée.

2. Dispositif selon la revendication 1, **caractérisé en ce que** ladite surface optique réglée de l'élément optique (11) a une orientation variant continument, infiniment différentiable et exprimable en série de Taylor.

3. Dispositif selon la revendication 2, **caractérisé en ce que** ladite génératrice courbe est contenue dans un plan méridional et est représentée par un vecteur de position représenté en coordonnées cartésiennes à l'aide de paramètres de coordonnées polaires par $p_1 = [\pm R(\alpha)\cos(\alpha+\beta), R(\alpha)\sin(\alpha+\beta)]$, où $\alpha$ est un angle d'élévation, $R(\alpha)$ est la norme d'un rayon vectoriel et $\beta$ est un angle d'inclinaison variant de façon harmonique en fonction de la position angulaire.

4. Dispositif selon la revendication 3, **caractérisé en ce que** ladite norme $R(\alpha)$ du rayon vectoriel varie de façon harmonique en fonction de la position angulaire.

**5.** Dispositif selon l'une des revendications 1 à 4, **caractérisé en ce que** ladite surface optique réglée de l'élément optique (11) est une face interne assurant une réflexion totale interne, et **en ce que** ledit élément optique (11) a un indice de réfraction variant de façon harmonique en fonction de la position angulaire.

**6.** Dispositif selon l'une des revendications précédentes, **caractérisé en ce que** ladite surface optique réglée de l'élément optique (11) est ouverte ou fermée.

**7.** Equipement de communication (2) pour un réseau de communication optique sans fil (3), ledit équipement de communication (2) comprenant au moins un premier récepteur (9-1) propre à recevoir des ondes lumineuses provenant d'un premier équipement (4) dudit réseau optique non filaire (3), et/ou au moins un premier transmetteur (10-1) propre à transmettre des ondes lumineuses audit premier équipement (4) ou à un second équipement (5) dudit réseau optique non filaire (3), **caractérisé en ce qu'**il comprend au moins un premier dispositif optique (1-1) selon l'une des revendications précédentes, placé en amont dudit premier récepteur (9-1) et/ou en aval dudit premier transmetteur (10-1).

**8.** Equipement de communication selon la revendication 7, **caractérisé en ce qu'**il comprend ledit premier récepteur (9-1) et ledit premier transmetteur (10-1), et **en ce que** ledit premier dispositif optique (1-1) est placé en amont dudit premier récepteur (9-1) et en aval dudit premier transmetteur (10-1) afin d'orienter dans l'espace un diagramme de réception d'ondes lumineuses et un diagramme de transmission d'ondes lumineuses.

**9.** Equipement de communication selon la revendication 8, **caractérisé en ce que** ledit premier transmetteur (10-1) est propre à transmettre audit premier équipement (4) d'autres ondes lumineuses provenant dudit second équipement (5), et **en ce qu'**il comprend un second transmetteur (10-2) couplé audit premier récepteur (9-1) et propre à transmettre audit second équipement (5) lesdites ondes lumineuses issues dudit premier récepteur (9-1), un second récepteur (9-2) propre à recevoir lesdites autres ondes lumineuses provenant dudit second équipement (5) et couplé audit premier transmetteur (10-1), et un second dispositif optique (1-2) placé en amont dudit second récepteur (9-2) et en aval dudit second transmetteur (10-2) afin d'orienter dans l'espace un diagramme de réception desdites autres ondes lumineuses et un diagramme de transmission desdites ondes lumineuses.

**10.** Equipement de communication selon la revendication 7, **caractérisé en ce qu'**il comprend ledit premier récepteur (9-1) et ledit premier transmetteur (10-1), **en ce que** ledit premier dispositif optique (1-1) est placé en amont dudit premier récepteur (9-1) afin d'orienter dans l'espace un diagramme de réception desdites ondes lumineuses, et **en ce qu'**il comprend un second dispositif optique (1-2) placé en aval dudit premier transmetteur (10-1) afin d'orienter dans l'espace un diagramme de transmission desdites ondes lumineuses.

**11.** Equipement de communication selon la revendication 10, **caractérisé en ce que** ledit premier transmetteur (10-1) est propre à transmettre audit premier équipement (4) d'autres ondes lumineuses provenant dudit second équipement (5), et **en ce qu'**il comprend un second transmetteur (10-2) couplé audit premier récepteur (9-1) et propre à transmettre audit second équipement (5) lesdites ondes lumineuses issues dudit premier récepteur (9-1), un second récepteur (9-2) propre à recevoir lesdites autres ondes lumineuses provenant dudit second équipement (5) et couplé audit premier transmetteur (10-1), un troisième dispositif optique (1-3) placé en amont dudit second récepteur (9-2) afin d'orienter dans l'espace un diagramme de réception desdites autres ondes lumineuses, et un quatrième dispositif optique (1-4) placé en aval dudit second transmetteur (10-2) afin d'orienter dans l'espace un diagramme de transmission desdites ondes lumineuses.

**12.** Equipement de communication selon l'une des revendications 8 à 11, **caractérisé en ce qu'**il constitue un répéteur de signaux optiques et/ou un multiplexeur de signaux optiques et/ou un expanseur de signaux optiques et/ou un combineur de signaux optiques.

**Patentansprüche**

**1.** Optische Vorrichtung (1) für eine Kommunikationsausrüstung (2) eines drahtlosen optischen Kommunikationsnetzwerks (3), wobei die Vorrichtung (1) ein monolithisches optisches Element (11) umfasst und mindestens eine eingestellte optische Oberfläche aufweist, die geeignet ist, ein Sendediagramm und/oder ein Empfangsdiagramm von Lichtwellen räumlich auszurichten, wobei diese eingestellte optische Oberfläche durch Translation und/oder Rotation eines gekrümmten Generators erzeugt wird,
**dadurch gekennzeichnet, dass** der gekrümmte Generator der mindestens einen eingestellten optischen Oberfläche des optischen Elements (11) eine nicht nullharmonisch variierende Ausrichtung in Abhängigkeit seiner Position in Translation und/oder Rotation in der mindestens einen eingestellten optischen Oberfläche besitzt.

2. Vorrichtung nach Anspruch 1, **dadurch gekennzeichnet, dass** die eingestellte optische Oberfläche des optischen Elements (11) eine kontinuierlich variierende, unendlich differenzierbare und seriell ausdrückbare Ausrichtung von Taylor hat.

3. Vorrichtung nach Anspruch 2, **dadurch gekennzeichnet, dass** der gekrümmte Generator in einer Mittäglich Ebene enthalten ist und durch einen Positionsvektor dargestellt ist, der in kartesischen Koordinaten mithilfe von Polarkoordinatenparametern durch $p_1 = [\pm R(\alpha)\cos(\alpha+\beta), R(a)\sin(a+\beta)]$ dargestellt wird, wobei $\alpha$ ein Höhenwinkel, $R(\alpha)$ die Norm eines Vektorradius und $\beta$ ein harmonisch variierender Neigungswinkel in Abhängigkeit von der Winkelposition ist.

4. Vorrichtung nach Anspruch 3, **dadurch gekennzeichnet, dass** die Norm $R(\alpha)$ des Vektorradius in Abhängigkeit von der Winkelposition harmonisch variiert.

5. Vorrichtung nach einem der Ansprüche 1 bis 4, **dadurch gekennzeichnet, dass** die eingestellte optische Oberfläche des optischen Elements (11) eine Innenseite ist, die eine innere Gesamtreflexion gewährleistet, und dass das optische Element (11) einen Brechungsindex aufweist, der sich harmonisch in Abhängigkeit von der Winkelposition ändert.

6. Vorrichtung nach einem der vorhergehenden Ansprüche, **dadurch gekennzeichnet, dass** die eingestellte optische Fläche des optischen Elements (11) geöffnet oder geschlossen ist.

7. Kommunikationsausrüstung (2) für ein drahtloses optisches Kommunikationsnetzwerk (3), wobei die Kommunikationsausrüstung (2) mindestens einen ersten Empfänger (9-1) umfasst, der geeignet ist, Lichtwellen, die aus einer ersten Ausrüstung (4) des drahtlosen optischen Netzwerkes (3) stammen, zu empfangen, und/oder mindestens einen ersten Sender (10-1), der geeignet ist, Lichtwellen an die erste Ausrüstung (4) oder an eine zweite Ausrüstung (5) des drahtlosen optischen Netzwerkes (3) zu übertragen, **dadurch gekennzeichnet, dass** es mindestens eine erste optische Vorrichtung (1-1) nach einem der vorhergehenden Ansprüche umfasst, die vor dem ersten Empfänger (9-1) und/oder nach dem ersten Sender (10-1) angeordnet ist.

8. Kommunikationsausrüstung nach Anspruch 7, **dadurch gekennzeichnet, dass** sie den ersten Empfänger (9-1) und den ersten Sender (10-1) umfasst und dass die erste optische Vorrichtung (1-1) vor dem ersten Empfänger (9-1) und nach dem ersten Sender (10-1) angeordnet ist, um ein Lichtwellenempfangsdiagramm und ein Lichtwellenübertragungsdiagramm räumlich auszurichten.

9. Kommunikationsausrüstung nach Anspruch 8, **dadurch gekennzeichnet, dass** der erste Sender (10-1) geeignet ist, an die erste Ausrüstung (4) andere Lichtwellen, die aus der zweiten Ausrüstung (5) stammen, zu übertragen, und dass sie einen zweiten Sender (10-2) umfasst, der an den ersten Empfänger (9-1) gekoppelt ist und geeignet ist, an die zweite Ausrüstung (5) die Lichtwellen aus dem ersten Empfänger (9-1) zu übertragen, einen zweiten Empfänger (9-2), der geeignet ist, die anderen Lichtwellen zu empfangen, die aus der zweiten Ausrüstung (5) stammen, und der an den ersten Sender (10-1) gekoppelt ist, und eine zweite optische Vorrichtung (1-2), die dem zweiten Empfänger (9-2) vorgeschaltet und dem zweiten Sender (10-2) nachgeschaltet ist, um ein Empfangsdiagramm der anderen Lichtwellen und ein Übertragungsdiagramm der Lichtwellen im Raum auszurichten.

10. Kommunikationsausrüstung nach Anspruch 7, **dadurch gekennzeichnet, dass** sie den ersten Empfänger (9-1) und den ersten Sender (10-1) umfasst, dass die erste optische Vorrichtung (1-1) dem ersten Empfänger (9-1) vorgeschaltet ist, um ein Empfangsdiagramm der Lichtwellen im Raum auszurichten, und dass sie eine zweite optische Vorrichtung (1-2) umfasst, die dem ersten Sender (10-1) nachgeschaltet ist um ein Übertragungsdiagramm der Lichtwellen im Raum auszurichten.

11. Kommunikationsausrüstung nach Anspruch 10, **dadurch gekennzeichnet, dass** der erste Sender (10-1) geeignet ist, an die erste Ausrüstung (4) andere Lichtwellen, die aus der zweiten Ausrüstung (5) stammen, zu übertragen, und dass sie einen zweiten Sender (10-2) umfasst, der an den ersten Empfänger (9-1) gekoppelt ist und geeignet ist, an die zweite Ausrüstung (5) die Lichtwellen aus dem ersten Empfänger (9-1) zu übertragen, einen zweiten Empfänger (9-2), der geeignet ist, die anderen Lichtwellen, die aus der zweiten Ausrüstung (5) stammen, zu empfangen, und der mit dem ersten Sender (10-1) gekoppelt ist, eine dritte optische Vorrichtung (1-3), die dem zweiten Empfänger (9-2) vorgeschaltet ist, um ein Empfangsdiagramm der anderen Lichtwellen im Raum auszurichten, und eine vierte optische Vorrichtung (1-4), die dem zweiten Sender (10-2) nachgeschaltet ist, um ein Übertragungsdiagramm der Lichtwellen im Raum auszurichten.

**12.** Kommunikationsausrüstung nach einem der Ansprüche 8 bis 11, **dadurch gekennzeichnet, dass** sie einen optischen Signalverstärker und/oder einen optischen Signalmultiplexer und/oder einen optischen Signalexpander und/oder einen optischen Signalkombinator darstellt.

**Claims**

**1.** An optical device (1) for a piece of communication equipment (2) of an optical wireless communication network (3), said device (1) comprising a monolithic optical element (11) and comprising at least one ruled optical surface capable of orienting in space a radiation pattern for transmission and/or a radiation pattern for reception of light waves, this ruled optical surface being generated by translating and/or rotating a curved generatrix,
**characterized in that** the curved generatrix of said at least one ruled optical surface of said optical element (11) has an orientation that varies harmonically by a non-zero amount as a function of its translational and/or rotational position within said at least one ruled optical surface.

**2.** The device according to claim 1, **characterized in that** said ruled optical surface of the optical element (11) has a continuously varying orientation, infinitely differentiable and expressible in Taylor series.

**3.** The device according to claim 2, **characterized in that** said curved generatrix lies in a meridional plane and is represented by a position vector represented in cartesian coordinates using polar coordinate parameters by $p_1 = [\pm R(\alpha)\cos(\alpha+\beta), R(\alpha)\sin(\alpha+\beta)]$, where $\alpha$ is an angle of elevation, $R(\alpha)$ is the norm of a vector radius and $\beta$ is an angle of inclination varying harmonically as a function of angular position.

**4.** The device according to claim 3, **characterized in that** said norm $R(\alpha)$ of the vector radius varies harmonically as a function of angular position.

**5.** The device according to any one of claims 1 to 4, **characterized in that** said ruled optical surface of the optical element (11) is an internal face providing total internal reflection, and **in that** said optical element (11) has a refractive index that varies harmonically as a function of angular position.

**6.** The device according to one of the preceding claims, **characterized in that** said ruled optical surface of the optical element (11) is open or closed.

**7.** A piece of communication equipment (2) for an optical wireless communication network (3), said piece of communication equipment (2) comprising at least a first receiver (9-1) suitable to receive light waves coming from a first piece of equipment (4) of said optical wireless network (3), and/or at least a first transmitter (10-1) suitable to transmit light waves to said first piece of equipment (4) or to a second piece of equipment (5) of said optical wireless network (3), **characterized in that** it comprises at least a first optical device (1-1) according to one of the preceding claims, placed upstream of said first receiver (9-1) and/or downstream of said first transmitter (10-1).

**8.** The piece of communication equipment according to claim 7, **characterized in that** it comprises said first receiver (9-1) and said first transmitter (10-1), and **in that** said first optical device (1-1) is placed upstream of said first receiver (9-1) and downstream of said first transmitter (10-1) so as to spatially orient a radiation pattern for reception of light waves and a radiation pattern for transmission of light waves.

**9.** The piece of communication equipment according to claim 8, **characterized in that** said first transmitter (10-1) is suitable to transmit to said first piece of equipment (4) other light waves coming from said second piece of equipment (5), and **in that** it comprises a second transmitter (10-2) coupled to said first receiver (9-1) and suitable to transmit to said second piece of equipment (5) said light waves coming from said first receiver (9-1), a second receiver (9-2) suitable for receiving said other light waves from said second piece of equipment (5) and coupled to said first transmitter (10-1), and a second optical device (1-2) placed upstream of said second receiver (9-2) and downstream of said second transmitter (10-2) in order to orient in space a radiation pattern for reception of said other light waves and a radiation pattern for transmission of said light waves.

10. The piece of communication equipment according to claim 7, **characterized in that** it comprises said first receiver (9-1) and said first transmitter (10-1), **in that** said first optical device (1-1) is placed upstream of said first receiver (9-1) in order to spatially orient a radiation pattern for reception of said light waves, and **in that** it comprises a second optical device (1-2) placed downstream of said first transmitter (10-1) in order to spatially orient a radiation pattern for transmission of said light waves.

11. The piece of communication equipment according to claim 10, **characterized in that** said first transmitter (10-1) is suitable to transmit to said first piece of equipment (4) other light waves coming from said second piece of equipment (5), and **in that** it comprises a second transmitter (10-2) coupled to said first receiver (9-1) and suitable to transmit to said second piece of equipment (5) said light waves coming from said first receiver (9-1), a second receiver (9-2) suitable to receive said other light waves from said second piece of equipment (5) and coupled to said first transmitter (10-1), a third optical device (1-3) placed upstream of said second receiver (9-2) in order to spatially orient a radiation pattern for reception of said other light waves, and a fourth optical device (1-4) placed downstream of said second transmitter (10-2) in order to spatially orient a radiation pattern for transmission of said light waves.

12. The piece of communication equipment according to one of the claims 8 to 11, **characterized in that** it constitutes an optical signal repeater and/or an optical signal multiplexer and/or an optical signal expander and/or an optical signal combiner.

## Figure 1

## Figure 2

## Figure 3

## Figure 4

## Figure 5

## Figure 6

$k = 3.4$

# Figure 7

# Figure 8

## Figure 9

k = 2

## Figure 10

k = 0,75

## Figure 11

## Figure 12

## Figure 13

## Figure 14

## RÉFÉRENCES CITÉES DANS LA DESCRIPTION

**Documents brevets cités dans la description**

- US 7113352 B2
- WO 2019238543 A
- WO 0169300 A